# EUROPÄISCHE PATENTANMELDUNG

(11) **EP 4 685 586 A1**
(43) Veröffentlichungstag der Anmeldung: **28.01.2026**
(21) Anmeldenummer: 24191211.2
(22) Anmeldetag: 26.07.2024
(51) Int. Cl.: G05B 17/02, G06F 1/14, G05B 19/042, G05B 19/418

(54) **VERFAHREN UND TAKTVERWALTUNG ZUR SYNCHRONISIERTEN AUSFÜHRUNG EINER MEHRZAHL VON ECHTZEITANWENDUNGEN**

(71) Anmelder: Siemens Aktiengesellschaft, 80333 München (DE)
(72) Erfinder: Ottermann, Johannes, 92224 Amberg (DE); Schmidt, Steffen, 91230 Happurg (DE); Hnaien, Iheb, 80809 München (DE); Ivanov, Petr, 90473 Nürnberg (DE); Mössner, Rudolf, 93133 Burglengenfeld (DE); Ockel, Alexander, 74182 Obersulm (DE); Pokorny, Andreas, 91058 Erlangen (DE); Sathya, Gayathery, 92224 Amberg (DE); Schmidt, Ines, 92421 Schwandorf (DE); Steindl, Johanna, 92284 Poppenricht (DE)
(74) Vertreter: Siemens Patent Attorneys

(57) **Zusammenfassung**

Die Erfindung betrifft ein Verfahren und eine Taktverwaltung zur synchronisierten Ausführung einer Mehrzahl von Echtzeitanwendungen (RTA1, RTA2, S2 SN, S2 PNT) in einem industriellen Automatisierungssystem, wobei die Echtzeitanwendungen (RTA1, RTA2, S2 SN, S2 PNT) in einer gemeinsamen Ausführungsumgebung (AU), insbesondere auf einer gemeinsamen Hardware-Plattform, ablaufen. Dabei wird in der Ausführungsumgebung (AU) eine zentrale Taktverwaltung (S1 RSC) ausgeführt, wobei die zentrale Taktverwaltung (S1 RSC) aus einem zentralen Takt (TRS) jeweils ein abgeleitetes Trigger-Signal (TR) zur Steuerung des Betriebs der jeweiligen Echtzeitanwendungen (RTA1, RTA2, S2 SN, S2 PNT) generiert und diesen bereitstellt, wobei eine Mehrzahl von Quellen für den zentralen Takt (TRS) verfügbar sind und zumindest eine der Quellen für den zentralen Takt (TRS) ausgewählt wird, und wobei durch die Taktverwaltung (S1 RSC) eine Konfiguration (CFG) verarbeitet wird, wobei die Konfiguration eine der Quellen für den zentralen Takt (TRS) spezifiziert und Vorschriften für die Ableitung der jeweiligen Trigger-Signale (TR) für die Echtzeitanwendungen (RTA1, RTA2, S2 SN, S2 PNT) aus dem zentralen Takt (TRS) umfasst. Damit ist eine applikationsübergreifende Betrachtung von Takten und eine Austauschbarkeit der Taktquelle ohne Anpassung der Applikationen / Echtzeitanwendungen möglich, so dass die Applikationen in unterschiedlichen Laufzeitszenarien via Konfiguration des Systems flexibel einsetzbar sind und ein Mischbetrieb von Laufzeitszenarien, basierend auf unterschiedlichen Taktquellen, möglich ist.

## Beschreibung

Die Erfindung betrifft ein Verfahren zur synchronisierten Ausführung einer Mehrzahl von Echtzeitanwendungen in einem industriellen Automatisierungssystem gemäß dem Oberbegriff des Patentanspruchs 1, und eine Taktverwaltung zur synchronisierten Ausführung einer Mehrzahl von Echtzeitanwendung in einem industriellen Automatisierungssystem gemäß dem Oberbegriff des Patentanspruchs 15.

Industrielle Automatisierungsanordnungen bzw. Automatisierungssysteme werden regelmäßig zur Steuerung von industriellen Prozessen (Prozessindustrie, chemische Industrie, Pharma-Industrie) oder von automatisierten Fertigungsanlagen (taktgesteuerte Fertigung von Automobilen, Produktion von Stückgütern) eingesetzt. In vielen Fällen ist dabei die Echtzeitfähigkeit der dabei eingesetzten Steuerungen und damit von deren Software (Firmware, Betriebssystem, Echtzeitanwendung) und Hardware gefordert, wobei mit der Echtzeitfähigkeit die garantierte Einhaltung von Ablaufqualitäten (z.B. Reaktionszeiten, Zykluszeiten und Ausführungszeiten der Echtzeitanwendungen) gemeint ist.

Während klassischerweise echtzeitfähige Automatisierungssysteme bzw. Steuerungen zur Einhaltung der Echtzeitanforderungen oft eine einfache Architektur aufweisen, die oft dadurch gekennzeichnet ist, dass nur einer Echtzeitanwendung auf einer Echtzeitregelungsteuerung (Hardware, Firmware, Betriebssystem) abläuft und dabei oft Hardware und Software von ein- und demselben Hersteller stammen, sind heutige Architekturen oft heterogen, wodurch die Echtzeitfähigkeit auch unter ungünstigen Bedingungen weiterhin garantiert werden muss.

Dies betrifft insbesondere offene, modularisierte industrielle Steuerungssysteme, auf denen verschiedene unabhängige Echtzeitanwendungen (oft auch Echtzeitapplikationen genannt) möglicherweise von unterschiedlichen Herstellern unter Einhaltung ihrer geforderten Ablaufqualitäten ausgeführt werden sollen. Diese Applikationen werden oft unabhängig von der konkreten Laufzeitumgebung erstellt / entwickelt und werden zudem manchmal von Dritter Seite zugeliefert als "Compilat", z.B. als Binärpaket (Object-code) oder als containerisierte Applikation, aber nicht in Form von Quellcode / Sourcecode.

In vielen Fällen sollen mehrere derartige Applikationen oder Echtzeitanwendungen gemeinsam eine industrielle Steuerungsaufgabe lösen, also applikationsübergreifend zusammenwirken. Die Anwendungen sollen dazu ihren Echtzeitqualitätsanforderungen entsprechend ausgeführt werden. Dazu ist es wichtig, dass sich die Echtzeitanwendungen möglichst nicht gegenseitig stören. Die Echtzeitanwendungen sollen portabel sein, also ohne Anpassungen wie z.B. Neu-Compilierung in unterschiedlichen Laufzeitszenarien eingesetzt werden können, z.B. in einer realen Echtzeitprozesssteuerung mit und ohne Isochronität und in unveränderter Form auch in Nicht-Echtzeitausführung. Dieselben Anwendungen sollen nun also sowohl im produktiven Betrieb (Echtzeit-Szenario), als auch in Simulationen oder gemischten Szenarien einsetzbar sein, ohne diese neu installieren oder gar compilieren zu müssen.

Im Stand der Technik wird ursprünglich meist nur eine ("monolithische") Runtime-Applikation als Laufzeitumgebung für Anwenderabläufe verwendet, somit gibt es oft keine unterschiedlichen unabhängigen einzelnen Echtzeitapplikationen ggf. mit (nachladbaren) Anwenderanteilen, so dass die geschilderten Probleme teilweise umgangen werden. Bekannt sind auch je nach Anwendungsszenario extra angepasste und distribuierte Spezialapplikationen (z.B. Applikationen ausschließlich für die reale Steuerung von Prozessen, oder Applikationen, die ausschließlich für die Simulation gedacht sind). Bekannt sind auch Lösungen aus Einzelapplikationen mit aufwändigen Anpassungen / Adaptionen, um diese miteinander zu integrieren und ein insgesamt koordiniertes Agieren zu ermöglichen.

Es ist also eine Aufgabe der vorliegenden Erfindung, in einer Automatisierungsanordnung mit mehreren Echtzeitanwendungen diese in koordinierter Weise miteinander zu betreiben und die Echtzeitanwendungen in unterschiedlichen Laufzeitszenarien, insbesondere Produktivbetrieb, Simulation oder Mischformen, unverändert einzusetzen.

Ein Kern der erfindungsgemäßen Lösung dieser Aufgabe besteht darin, eine Integration der verschiedenen Echtzeitapplikationen bzw. Echtzeitanwendungen auf einem Laufzeitsystem unter Verwendung eines gemeinsamen zentralen Applikationstaktverständnisses vorzunehmen. Dabei kann das Laufzeitsystem entweder aus einer Ausführungseinheit bestehen (PC, Server, Edge-Gerät, PLC, virtuelle Maschine, Cloud-basierte Recheneinheit, ...), oder aber auch ein verteiltes System aus vernetzten Einheiten sein. Dabei ist die Taktverwaltung unabhängig von anderen Konzepten (wie Echtzeittaskverwaltung, Ressourcenverwaltung). Eine Zentralisierung des Taktmanagements pro Gerät der Ausführungsumgebung oder fallweise für eine gesamte verteilte Ausführungsumgebung ermöglicht das Koordinieren der Ausführung der Anwendungen über Applikationsgrenzen hinweg und kann durch ein zentrales Engineering etabliert bzw. konfiguriert werden, wobei durch eine lokale Benutzerschnittstelle die Konfiguration ggf. geändert werden kann. Die Kommunikation von den Echtzeitanwendungen zu der Taktverwaltung zur Konfiguration des benötigten Trigger-Signals (je nach spezifischer Anwendung auch auch Taktsignal genannt) wird über eine wohl definierte zentrale Schnittstelle, z.B. ein API (application programming interface) der Taktverwaltung, vorgenommen; vorteilhaft entspricht diese Schnittstelle in Bezug auf die Übertragung des generierten Trigger-Signals an die Echtzeitanwendung einer klassischen Taktquelle, so dass die Echtzeitanwendungen für den erfindungsgemäßen Betrieb nicht geändert werden müssen. Ein Gateway zwischen Geräten der Automatisierungsanordnung ermöglicht eine Synchronisation von Abläufen über Gerätegrenzen hinweg und somit eine koordinierte verteilte Laufzeitumgebung. Insgesamt wird die Taktquelle von der Applikation abstrahiert und aus einer zentralen und sogar zur Laufzeit wechselbaren Taktquelle lässt sich die koordinierte Taktung und Ausführung von Echtzeitanwendungen erreichen, auch in hybriden Szenarien aus operativ betriebenen Anwendungen und simulierten Komponenten. Es ist auch ein stufenweise verschachteltes Koordinieren (Scheduling) von Anwendungs-Tasks möglich. Eine Taktquelle kann dabei ein Systemtakt eines Computers oder einer Kommunikationsverbindung (z.B. Profibus, Profinet) sein, kann aber auch vor allem ein (zyklischer) Ausführungstakt einer "Task", einer Funktion oder eines Organisationsbausteins (OB) einer der Echtzeitanwendungen sein. Beispielsweise kann auch eine angeschlossene Maschine ("Numerische Steuerung"-Steuerung) als Taktquelle genutzt werden und neben- oder nachgelagerte Komponenten bzw. deren Echtzeitsteuerungen und - anwendungen können sich mit diesem Takt oder einem daraus abgeleiteten Trigger-Signal synchronisieren.

Die Lösung der Aufgabe ist insbesondere in den Patentansprüchen angegeben.

Dabei wird ein Verfahren zur synchronisierten Ausführung einer Mehrzahl von Echtzeitanwendungen in einem industriellen Automatisierungssystem vorgeschlagen, wobei die Echtzeitanwendungen in einer gemeinsamen Ausführungsumgebung, insbesondere auf einer gemeinsamen Hardware-Plattform, ablaufen. Dabei wird in der Ausführungsumgebung eine zentrale Taktverwaltung ausgeführt, wobei die zentrale Taktverwaltung aus einem zentralen Takt jeweils ein abgeleitetes Trigger-Signal zur Steuerung des Betriebs der jeweiligen Echtzeitanwendungen generiert und dieses den Echtzeitanwendungen bereitstellt, wobei eine Mehrzahl Quellen für den zentralen Takt verfügbar sind und zumindest eine der Quellen für den zentralen Takt ausgewählt wird, und wobei durch die Taktverwaltung eine Konfiguration verarbeitet wird, wobei die Konfiguration eine der Quellen für den zentralen Takt spezifiziert und Vorschriften für die Ableitung der jeweiligen Trigger-Signale für die Echtzeitanwendungen aus dem zentralen Takt umfasst. Damit ist eine applikationsübergreifende Betrachtung von Takten und eine Austauschbarkeit der Taktquelle ohne Anpassung der Applikationen / Echtzeitanwendungen möglich, so dass die Applikationen in unterschiedlichen Laufzeitszenarien via Konfiguration des Systems flexibel einsetzbar sind und ein Mischbetrieb von Laufzeitszenarien, basierend auf unterschiedlichen Taktquellen, möglich ist.

Die Aufgabe wird außerdem durch eine Taktverwaltung zur synchronisierten Ausführung einer Mehrzahl von Echtzeitanwendungen in einem industriellen Automatisierungssystem gelöst, wobei die Echtzeitanwendungen in einer gemeinsamen Ausführungsumgebung, insbesondere auf einer gemeinsamen Hardware-Plattform, ablaufen. Dabei ist vorgesehen, dass die Taktverwaltung in der Ausführungsumgebung ausgeführt wird, wobei die zentrale Taktverwaltung dazu eingerichtet ist, aus einem zentralen Takt jeweils ein abgeleitetes Trigger-Signal zur Steuerung des Betriebs der jeweiligen Echtzeitanwendungen zu generieren und den Echtzeitanwendungen bereitzustellen, so dass eine Mehrzahl Quellen für den zentralen Takt verfügbar sind, und wobei vorgesehen wird, dass durch die Taktverwaltung zumindest eine der Quellen für den zentralen Takt ausgewählt wird, und dass die Taktverwaltung dazu eingerichtet ist, eine Konfiguration, insbesondere eine über ein API oder eine Benutzeroberfläche eingegebene oder geänderte Konfiguration, zu verarbeiten, wobei die Konfiguration zumindest eine der Quellen für den zentralen Takt spezifiziert und Vorschriften für die Ableitung der jeweiligen Trigger-Signale für die Echtzeitanwendungen aus dem oder einem der zentralen Takte umfasst. Mit dieser Taktverwaltung können die anhand des Verfahrens diskutierten Vorteile erzielt werden.

Vorteilhafte Ausgestaltungen des erfindungsgemäßen Verfahrens sind in den abhängigen Patentansprüchen angegeben. Die dabei beschriebenen Merkmale gelten sinngemäß auch für die erfindungsgemäße Anordnung bzw. die erfindungsgemäße Taktverwaltung. Die Merkmale aus den abhängigen Patentansprüchen können sowohl einzeln als auch in sinnfälliger Kombination miteinander angewendet werden.

Vorteilhaft kann ein interner Takt einer der Echtzeitanwendungen, insbesondere ein zyklischer Ausführungstakt einer Task oder eines Organisationsbausteins, als Quelle verwendet werden. Es kann in einer Variante aber auch ein Takt eines externen Gerätes, insbesondere einer industriellen Steuerungseinrichtung bzw. einer Anwendung dieser, als Quelle verwendet werden. In einer weiteren Variante wird ein Takt einer getakteten externen Kommunikationsverbindung, insbesondere einer Kommunikationsverbindung mit einem industriellen Kommunikationsprotokoll, als Quelle für den zentralen Takt verwendet.

Vorteilhaft macht man sich zu Nutze, wenn zumindest eine der Echtzeitanwendungen einen zyklischen Ausführungskontext, insbesondere eine zyklisch in einem definierten Zeitraster auszuführende Task eines Automatisierungsprogramms, aufweist, wobei die Ausführung des Ausführungskontextes durch das dieser Echtzeitanwendung bereitgestellte Trigger-Signal getriggert wird.

In einer weiteren vorteilhaften Ausführungsform ist die Ausführungsumgebung Bestandteil einer Co-Simulation und dazu an ein System zur Simulation eines industriellen Prozesses oder zur Simulation einer industriellen Komponente, insbesondere an eine simulierte industrielle Steuerung, angebunden, wobei als Quelle für das zentrale Trigger-Signal ein zyklischer Ausführungstakt der Simulation verwendet wird. Umgekehrt kann auch der Takt für die Simulation aus einem Takt einer an die reale Umgebung angebundenen Echtzeitanwendung generiert werden, so dass Teile des realen Systems in zeitlich koordinierter Weise simuliert werden können.

Zum einheitlichen Zugriff wird durch die Taktverwaltung zumindest eine definierte Schnittstelle für die Bereitstellung der Trigger-Signale verwendet, insbesondere ein API. Vorteilhaft ist diese Schnittstelle zu den bislang zur Taktung einzelner Anwendung verwendeten Schnittstelle kompatibel, so dass die Echtzeitanwendungen für einen Betrieb in einem koordinierten Szenario nicht aufwendig geändert werden müssen. Dazu bildet in einer Variante die Schnittstelle einen nativen Taktgenerator einer industriellen Hardware-Plattform, insbesondere einer industriellen Steuerung zur Ausführung einer Echtzeitanwendung, nach, wobei zumindest eine der Echtzeitanwendungen auf das Trigger-Signal nach Art eines Zugriffs auf den nativen Taktgenerator zugreift. Der Zentrale Taktgenerator nutzt z.B. eine lokale Uhr (nativer Taktgenerator), um der Echtzeitanwendung auf die gleiche Art und Weise einen Takt zu geben, als ob diese sich selbst über die lokale Uhr in einer Art Standalone-Betrieb mit dem Takt synchronisiert hätte. Der Taktgenerator sich also identisch zu einer nativen Taktquelle und ist damit für die Echtzeitanwendungen kompatibel austauschbar.

Vorteilhaft kann die Konfiguration der Taktverwaltung in einem laufenden Betrieb der Echtzeitanwendungen ohne Neustart der Echtzeitanwendungen geändert werden.

In einer Variante weist die Ausführungsumgebung eine Datenverbindung zu einer weiteren Ausführungsumgebung oder zu einer weiteren Hardware-Plattform auf, wobei der zentrale Takt und/oder ein daraus abgeleiteter Takt einer Echtzeitanwendung auf oder in dieser weiteren Ausführungsumgebung bzw. Hardware-Plattform über die Datenverbindung zur Verfügung gestellt wird, oder umgekehrt. Beispielsweise kann eine externe Edge Applikation zum Triggern des Taktes für die vorliegende Laufzeitumgebung bzw. deren Anwendungen oder Tasks verwendet werden. In einer Variante weist die weitere Ausführungsumgebung eine weitere zentrale Taktverwaltung auf, wobei diese weitere Taktverwaltung den über die Datenverbindung bereitgestellten Takt als zentralen Takt der ersten Taktverwaltung für die weitere Ausführungsumgebung verwendet, oder umgekehrt.

Vorteilhaft ist die Taktverwaltung zur Verarbeitung einer Mehrzahl Quellen für den zentralen Takt eingerichtet, wobei für die Ableitung der Trigger-Signale jeweils eine der Quellen ausgewählt wird. Die Ableitung der Trigger-Signale geschieht dabei vorteilhaft über einen für jedes Trigger-Signal separat festgelegten Teilungs- oder Multiplikationsfaktor in Bezug auf das Signal der Taktquelle, wobei besonders vorteilhaft die Faktoren jeweils ein ganzzahliges Vielfaches eines Grundfaktors darstellen. Vorteilhaft kann die Konfiguration der zentralen Taktverwaltung über ein API oder über eine Benutzeroberfläche der Taktverwaltung eingegeben oder geändert werden, wobei besonders vorteilhaft vorgesehen ist, dass bereits durch das Engineering der betreffenden Automatisierungsanordnung eine Grundkonfiguration vorgegeben wird.

Vorteilhaft werden durch eine Echtzeitanwendung jeweils geforderte Eigenschaften für ein von ihr benötigtes Trigger-Signal spezifiziert und zu der zentralen Taktverwaltung übermittelt, insbesondere durch Zugriff auf ein API der Taktverwaltung, wobei in der zentralen Taktverwaltung die Konfiguration derart angepasst wird, dass für diese Echtzeitanwendung das benötigte Trigger-Signal generiert und bereitgestellt wird. Dabei kann neben den Eigenschaften des Trigger-Signals auch die bevorzugte Taktquelle und ggf. auch etwaige Fallback-Taktquellen angegeben werden.

Ein Ausführungsbeispiel des erfindungsgemäßen Verfahrens wird nachfolgend anhand der Zeichnungen erläutert. Es dient gleichzeitig der Erläuterung einer erfindungsgemäßen Taktverwaltung bzw. einer erfindungsgemäßen Anordnung.

Dabei zeigen:
- Figur 1: eine schematische Darstellung aus einer erfindungsgemäßen Taktverwaltung und vier Echtzeitanwendungen,
- Figur 2: die Anordnung aus der Figur 1, bei der der zentrale Takt aus einem Kommunikationstreiber gewonnen wird,
- Figur 3: die Anordnung aus der Figur 1, bei der der zentrale Takt aus einer externen Simulation bezogen wird,
- Figur 4: in schematischer Darstellung die grundlegende Kommunikation zwischen einer Echtzeitanwendung und der Taktverwaltung, und
- Figur 5: in schematischer Darstellung die Meldungen zwischen Echtzeitanwendungen als Clients und einer Taktverwaltung als Broker.

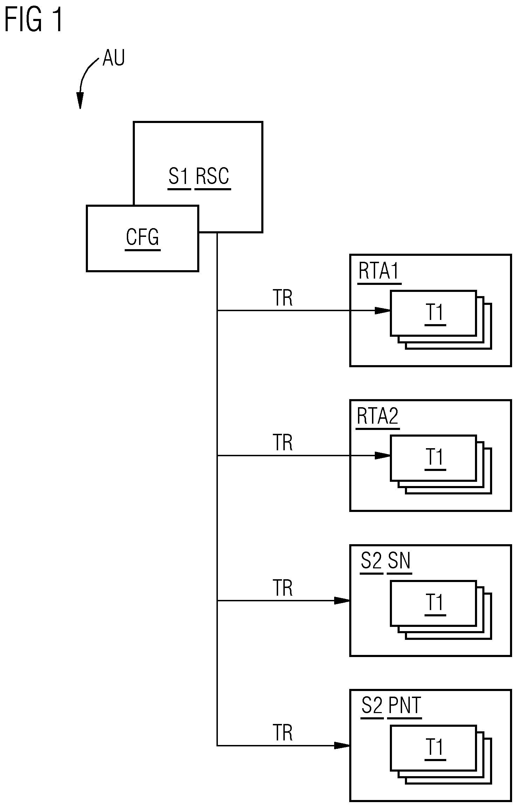

In der Figur 1 ist eine Ausführungsumgebung AU eines industriellen Automatisierungssystems gezeigt, wobei eine Anzahl Echtzeitanwendungen RTA1, RTA2, S2 SN, S2 PNT (RTA: Real Time App; SN: Numerische Steuerung; PNT: Profinet-Treiber) mit jeweiligen Anwendungsbausteinen ("Tasks") - hier ist jeweils nur exemplarisch eine einzige Task T1 gezeigt - auf einer Hardware-Plattform ablaufen.

Eine Task T1 ist ein Ausführungssteuerungselement, das für die periodische oder getriggerte Ausführung einer Gruppe von zugeordneten Programmorganisationseinheiten bereitgestellt wird. Eine Task T1 ist in der Lage, z. B. in regelmäßigen Abständen die Ausführung einer Reihe von Programmen und Funktionsbausteininstanzen zu verursachen.

Als Taktverwaltung, auch Taktservice genannt, dient hier eine zentrale Software S1 RSC (RSC: Real-time Supervision and Coordination), wobei die Abkürzung S1 (S: Scheduler) eine Stufe in einer hierarchischen Taktverwaltung angibt; später werden auch noch die Stufen S0 und S2 eingeführt. Die Software S1 RSC ist eine zentrale Verwaltungssoftware für die Ausführungsumgebung AU bzw. für die Anwendungen des industriellen Automatisierungssystems, wobei jedoch im vorliegenden Ausführungsbeispiel nur die dort integrierte Taktverwaltung diskutiert wird. Die Taktverwaltung S1 RSC wird durch ein nicht dargestelltes Enigineeringsystem vorab konfiguriert, wobei beispielsweise in Form einer Datei oder einer anderen Informationsrepräsentation eine Konfiguration CFG auf die Hardware-Plattform übertragen wird, die dort gegebenenfalls auch durch ein Benutzerinterface (HMI) geändert werden kann oder die durch eine der Echtzeitanwendungen RTA1, RTA2, S2 SN, S2 PNT konfiguriert werden kann. Die gezeigte Echtzeitanwendung S2 SN ist im vorliegenden Beispiel ein Numerische Steuerung-Baustein, also ein Baustein einer Echtzeitanwendung zur Steuerung einer Werkzeugmaschine oder dergleichen; die Echtzeitanwendung S2 PNT ist ein Treiber für eine Kommunikationsverbindung (hier: Profinet). Die Bezeichnung S2 besagt dabei, dass diese beiden Echtzeitanwendungen jeweils ein der Komponente der S1 RSC unterlagerten Komponente in Bezug auf die Taktverwaltung darstellen. D.h., dass diese und die anderen Echtzeitanwendungen bzw. deren Tasks T1 durch ein Trigger-Signal TR von der Komponente S1 RSC angesteuert werden.

Während im Ausführungsbeispiel der Figur 1 die Taktverwaltung S1 RSC die Trigger-Signale TR für die Echtzeitanwendungen RTA1, RTA2, S2 SN, S2 PNT aus einem intern vorliegenden zentralen Takt, der beispielsweise aus einem Systemtakt oder Prozessortakt der unterliegenden Hardware-Komponente besteht oder abgeleitet ist, generiert, können auch andere Quellen für den zentralen Takt konfiguriert werden. Grundsätzlich kann jede der Echtzeitanwendungen RTA1, RTA2, S2 SN, S2 PNT über eine Programmierschnittstelle (API) der Taktverwaltung S1 RSC die Konfiguration CFG ändern und dabei bestimmen, welche Quelle für den zentralen Takt verwendet werden soll, mit welchen anderen Anwendungen das Trigger-Signal TR ggf. synchronisiert sein soll und mit welchem Multiplikator oder Teilungsverhältnis das jeweils benötigte Trigger-Signal TR aus dem zentralen Takt generiert werden soll. Dies gilt insbesondere in den Fällen, in denen nicht ein konstantes, kontinuierliches Signal für den zentralen Takt verwendet werden soll, sondern beispielsweise ein Applikationstakt oder ein Ausführungstakt einer zyklisch ausgeführten Anwendungsaufgabe (Task). Somit kann auch jede der Echtzeitanwendungen RTA1, RTA2, S2 SN, S2 PNT oder eine externe Quelle für den zentralen Takt verwendet und konfiguriert werden. Außerdem können sowohl der zentrale Takt als auch die Trigger-Signale TR über die Grenzen einer einzelnen Hardware-Komponente hinausgeleitet und verwendet werden, d. h., dass die Ausführungsumgebung mehr als eine gemeinsame Hardware-Plattform umfassen kann. Ein Trigger oder Trigger-Signal TR ist dabei ein zentral generiertes Steuerungssignal zur Ausführung von Tasks und wird aus einer Quelle für den zentralen Takt erzeugt.

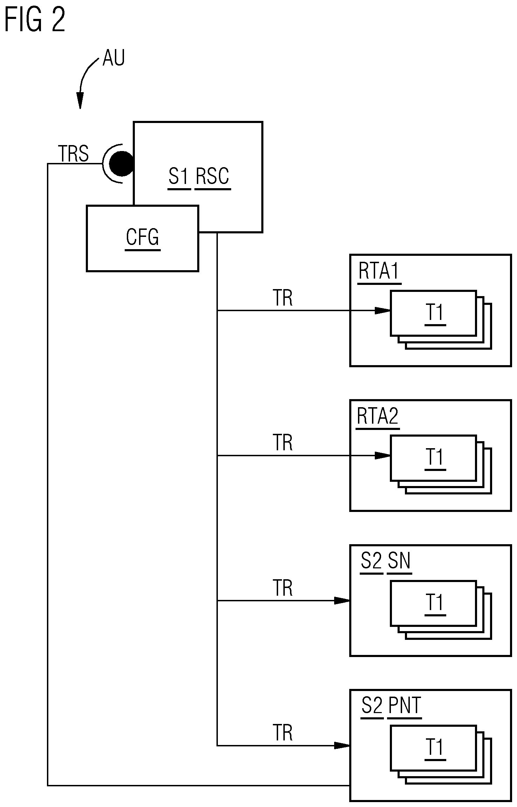

Die Figur 2 zeigt ein Ausführungsbeispiel, welches an das Ausführungsbeispiel der Figur 1 angelehnt ist. Im Unterschied zu der Situation in der Figur 1 wird ein Kommunikationstakt aus einem Kommunikationsnetzwerk PN (Profinet) als externe Taktquelle (external clock source) verwendet, welches sowohl den Profinet-Treiber, also die Echtzeitanwendung S2 PNT, steuert, als auch daraus den zentralen Takt über ein Signal TRS (Trigger Set) der Taktverwaltung S1 RSC bereitstellt. Der Profinet-Treiber ist an eine Profinet-Kommunikationsinfrastruktur angeknüpft (in der Figur 2 nicht dargestellt). Das Signal TRS ist also in den vorliegenden Beispielen der zentrale Takt; alternativ kann der zentrale Takt aber auch aus anderen Quellen gewonnen werden, beispielsweise aus einem Systemtakt (Prozessortakt, Realtime-Clock o.ä.) der Hardware, und liegt dann als internes Signal TRS vor.

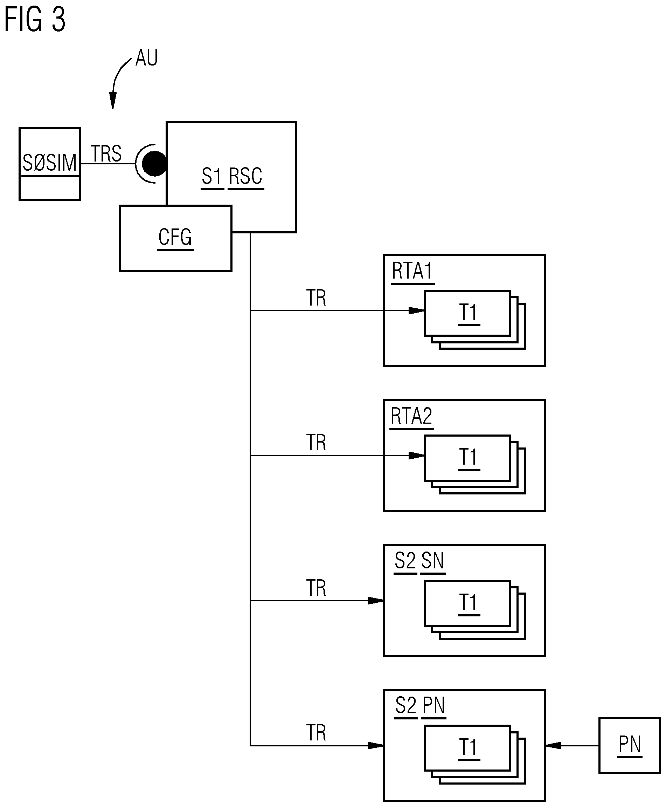

Während also die Taktverwaltung S1 RSC aus Figur 1 eine Taktquelle der Stufe 1 ist, ist die Taktquelle S2 PNT aus der Figur 2 ein sog. S2-Scheduler, also ein untergeordneter Scheduler der Applikation (z.B. der Numerische Steuerung oder, wie hier, der Profinet-Applikation). Es kann auch eine übergeordnete Taktquelle der Stufe 0, also ein sog. S0-Scheduler, eingesetzt werden; dieser Fall ist in der Figur 3 gezeigt.

Im Unterschied zu der Situation aus den Figuren 1 und 2 zeigt die Figur 3 eine externe Quelle S0SIM für den zentralen Takt, aus der das Signal TRS (Trigger Set) als zentraler Takt für die Taktverwaltung S1 RSC gewonnen wird. Dabei handelt es sich um eine Simulationseinrichtung, die beispielsweise für die Inbetriebnahme der Echtzeitanwendungen RTA1, RTA2, S2 SN, S2 PNT einen Teil der industriellen Automatisierungsumgebung simuliert, beispielsweise einen noch nicht gebauten Anlagenteil. Die Ausführungsgeschwindigkeit des Gesamtsystems kann dabei vom Simulationssystem vorgegeben werden, was insbesondere dann sinnvoll ist, wenn durch die Echtzeitanwendungen RTA1, RTA2, S2 SN, S2 PNT keine reale Hardware angesteuert werden muss und somit das Gesamtsystem in der Simulation bzw. Erprobung nicht in Echtzeit ablaufen muss, sondern gegebenenfalls schneller oder auch langsamer ausgeführt wird. Dabei gibt das Simulationssystem also die synchrone Ausführungsgeschwindigkeit des Gesamtsystems vor. Auch der umgekehrte Fall ist möglich.

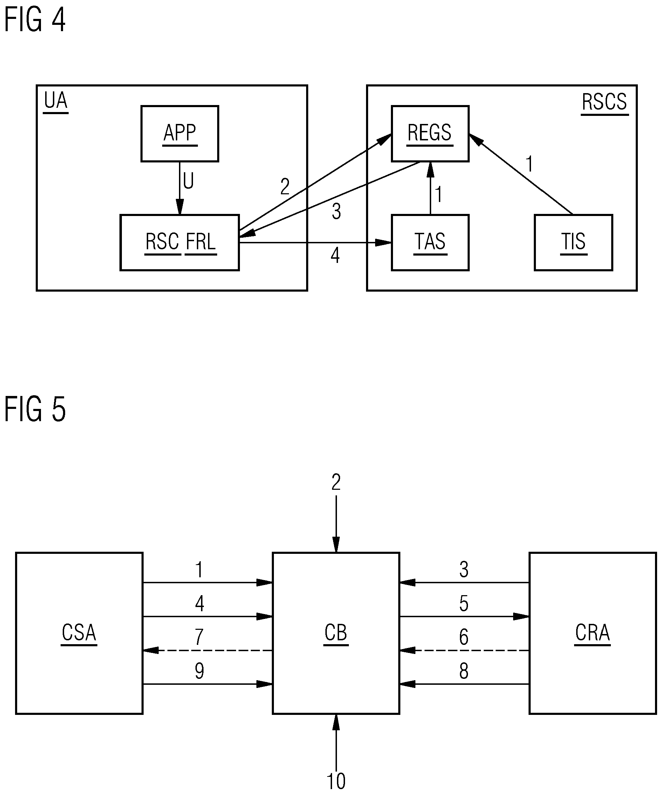

Die Figur 4 zeigt die grundsätzliche Beziehung zwischen einer Anwendung UA (User Application) und einem System RSCS (Real-time Supervision and Coordination - Service) zur Taktverwaltung. Die Anwendung UA besteht aus der eigentlichen Applikation APP, die eine Laufzeitbibliothek RSC FRL (Real-time Supervision and Coordination - Framework Library) verwendet (Pfeil U). Das System RSCS besteht aus einem Registrierungsservice REGS, einem Task-dienst TAS zur Taskverwaltung (nicht zentraler Gegenstand der vorliegenden Ausführungen), der die Anwendungen in einem Schritt1 bei der Registrierung REGS anmeldet, und einem Zeitdienst TIS (time service) zur Generierung von Trigger- und Trigger-Signalen; auch dieser registriert sich in einem Schritt1 bei der Registrierung REGS. Bei der Verwendung des Frameworks RSC FRL sendet dieses eine Anfrage 2 an die Registrierung und bekommt als Antwort 3 die Daten über das Service-Interface (z.B. über eine API) des Zeitdienstes TIS oder des Task-dienstes TAS. In einem Schritt 4 wird dann durch das Framework RSC FRL auf den entsprechenden Dienst zugegriffen.

Die Figur 5 erläutert den grundsätzlichen Vorgang der Registrierung einer Anwendung CSA (clock source app) als Taktgeber oder Eventgeber, also als Quelle für den zentralen Takt, und einer weiteren Anwendung CRA (clock receiver app) als Abonnent eines Trigger-Signals TR bei einer zentralen Taktverwaltung, die hier clock broker CB genannt wird. In einem 1. Schritt registriert sich die Anwendung CSA bei der Taktverwaltung CB als Taktquelle, wonach die Taktverwaltung CB in einem Schritt 2 eine Taktverarbeitung (Ausführungskontext/Funktion/Implementierung für die Behandlung und Weiterleitung des Trigger-Signals mit einer Datenstruktur zur Speicherung der spezifischen Daten) zu der Taktquelle instanziiert, einen sog. clock handler. Die Anwendung CRA registriert sich bei der Taktverwaltung CB mit ihren Anforderungen an das benötigte Trigger-Signal in einem Schritt 3. Im Schritt 4 sendet die Anwendung CSA Taktimpulse an die Taktverwaltung CB, wobei in einem Schritt 5 die Taktverwaltung CB daraus abgeleitete Trigger-Signale an die Anwendung CRA sendet. Stellt die Anwendung CRA ihren Betrieb ein, meldet sie dies in einem Schritt 6 an die Taktverwaltung CB, die in einem Schritt 7 der Anwendung CSA meldet, dass kein zentraler Takt mehr benötigt wird. Im Schritt 8 de-registriert sich die Anwendung CRA bei der Taktverwaltung CB, gleiches führt die Anwendung CSA in Schritt 9 durch, wonach im Schritt 10 der in Schritt 2 erzeugte clock handler deaktiviert wird.

Durch das anhand der Figuren erläuterte Verfahren bzw. durch das beschriebene System können folgende Vorteile erzielt werden:
- Die Taktquelle kann gewechselt werden, ohne dass die Applikation sich ändern muss (reiner Systemkonfigurationsschritt, keine Re-Compilierung), dadurch wird die Einsatzmöglichkeit der Applikationen erhöht und flexibilisiert.
- Externe Taktquellen (z.B. isochroner Feldbustakt) können unterstützt werden, unabhängig vom Betriebssystem (siehe Figur 2).
- Eine Integration von Simulationsabläufen, Simulationstools und Ansätzen zur Co-Simulation ist durch die Unterstützung von virtueller Zeit als Taktquelle möglich (siehe Figur 3).
- Unterschiedliche Taktquellen können auch gleichzeitig für verschiedene Applikationen im System genutzt werden.
- Das Task-Scheduling kann über verschiedene Ebenen hinweg kaskadiert werden (S0 = externer Scheduler, S1 = zentraler Scheduler auf dem Gerät, S2 = untergeordneter Scheduler der Applikation).

Eine applikationsübergreifende Betrachtung von Takten ist somit gegeben. Das Verfahren ermöglicht die Austauschbarkeit der Taktquelle ohne Anpassung der Applikationen, damit werden die Applikationen in unterschiedlichen Laufzeitszenarien via Konfiguration des Systems flexibel einsetzbar. Ein Mischbetrieb von Laufzeitszenarien ist möglich, basierend auf unterschiedlichen Taktquellen, und ermöglicht eine Einbindung von Echtzeitanwendungen in Simulationsszenarien, ohne dabei an das starre Timing der Echtzeitanwendungen gebunden zu sein.

## Patentansprüche

1. Verfahren zur synchronisierten Ausführung einer Mehrzahl von Echtzeitanwendungen (RTA1, RTA2, S2 SN, S2 PNT) in einem industriellen Automatisierungssystem, wobei die Echtzeitanwendungen (RTA1, RTA2, S2 SN, S2 PNT) in einer gemeinsamen Ausführungsumgebung (AU), insbesondere auf einer gemeinsamen Hardware-Plattform, ablaufen,
**dadurch gekennzeichnet,**
**dass** in der Ausführungsumgebung (AU) eine zentrale Taktverwaltung (S1 RSC) ausgeführt wird, wobei die zentrale Taktverwaltung (S1 RSC) aus einem zentralen Takt (TRS) jeweils ein abgeleitetes Trigger-Signal (TR) zur Steuerung des Betriebs der jeweiligen Echtzeitanwendungen (RTA1, RTA2, S2 SN, S2 PNT) generiert und diesen bereitstellt,
**dass** eine Mehrzahl Quellen für den zentralen Takt (TRS) verfügbar sind und zumindest eine der Quellen für den zentralen Takt (TRS) ausgewählt wird, und
**dass** durch die Taktverwaltung (S1 RSC) eine Konfiguration (CFG) verarbeitet wird, wobei die Konfiguration eine der Quellen für den zentralen Takt (TRS) spezifiziert und Vorschriften für die Ableitung der jeweiligen Trigger-Signale (TR) für die Echtzeitanwendungen (RTA1, RTA2, S2 SN, S2 PNT) aus dem zentralen Takt (TRS) umfasst.

2. Verfahren nach Patentanspruch 1,
**dadurch gekennzeichnet,**
**dass** ein interner Takt einer der Echtzeitanwendungen (RTA1, RTA2, S2 SN, S2 PNT) als die Quelle verwendet wird.

3. Verfahren nach einem der vorhergehenden Patentansprüche,
**dadurch gekennzeichnet,**
**dass** ein Takt eines externen Gerätes, insbesondere einer industriellen Steuerungseinrichtung, als die Quelle verwendet wird.

4. Verfahren nach einem der vorhergehenden Patentansprüche,
**dadurch gekennzeichnet,**
**dass** ein Takt einer getakteten externen Kommunikationsverbindung (PN) , insbesondere einer Kommunikationsverbindung mit einem industriellen Kommunikationsprotokoll, als die Quelle für den zentralen Takt (TRS) verwendet wird.

5. Verfahren nach einem der vorhergehenden Patentansprüche,
**dadurch gekennzeichnet,**
**dass** zumindest eine der Echtzeitanwendungen (RTA1, RTA2, S2 SN, S2 PNT) einen zyklischen Ausführungskontext, insbesondere eine zyklisch in einem definierten Zeitraster auszuführende Task (T1) eines Automatisierungsprogramms, aufweist, wobei die Ausführung des Ausführungskontextes durch das dieser Echtzeitanwendung (RTA1, RTA2, S2 SN, S2 PNT) bereitgestellte Trigger-Signal (TR) getriggert wird.

6. Verfahren nach einem der vorhergehenden Patentansprüche,
**dadurch gekennzeichnet,**
**dass** die Ausführungsumgebung Bestandteil einer Co-Simulation ist und dazu an ein System (S0SIM) zur Simulation eines industriellen Prozesses oder zur Simulation einer industriellen Komponente, insbesondere an eine simulierte industrielle Steuerung, angebunden ist, wobei als die Quelle für das zentrale Trigger-Signal (TR) ein zyklischer Ausführungstakt der Simulation verwendet wird.

7. Verfahren nach einem der vorhergehenden Patentansprüche,
**dadurch gekennzeichnet,**
**dass** durch die Taktverwaltung (S1 RSC) zumindest eine definierte Schnittstelle für die Bereitstellung der Trigger-Signale (TR) verwendet wird, insbesondere ein API.

8. Verfahren nach Patentanspruch 7,
**dadurch gekennzeichnet,**
**dass** die Schnittstelle einen nativen Taktgenerator einer industriellen Hardware-Plattform, insbesondere einer industriellen Steuerung zur Ausführung einer Echtzeitanwendung (RTA1, RTA2, S2 SN, S2 PNT), nachbildet, und dass zumindest eine der Echtzeitanwendungen (RTA1, RTA2, S2 SN, S2 PNT) auf das Trigger-Signal (TR) nach Art eines Zugriffs auf den nativen Taktgenerator zugreift.

9. Verfahren nach einem der vorhergehenden Patentansprüche,
**dadurch gekennzeichnet,**
**dass** die Konfiguration (CFG) der Taktverwaltung (S1 RSC) in einem laufenden Betrieb der Echtzeitanwendungen (RTA1, RTA2, S2 SN, S2 PNT) ohne Neustart der Echtzeitanwendungen (RTA1, RTA2, S2 SN, S2 PNT) geändert wird.

10. Verfahren nach einem der vorhergehenden Patentansprüche,
**dadurch gekennzeichnet,**
**dass** die Ausführungsumgebung eine Datenverbindung zu einer weiteren Ausführungsumgebung aufweist, wobei der zentrale Takt und/oder ein daraus abgeleiteter Takt einer Echtzeitanwendung (RTA1, RTA2, S2 SN, S2 PNT) auf oder in dieser weiteren Ausführungsumgebung über die Datenverbindung zur Verfügung gestellt wird.

11. Verfahren nach Patentanspruch 10,
**dadurch gekennzeichnet,**
**dass** die weitere Ausführungsumgebung eine weitere zentrale Taktverwaltung (S1 RSC) aufweist, wobei diese weitere Taktverwaltung (S1 RSC) den über die Datenverbindung bereitgestellten Takt als zentralen Takt (TRS) für die weitere Ausführungsumgebung verwendet.

12. Verfahren nach einem der vorhergehenden Patentansprüche,
**dadurch gekennzeichnet,**
**dass** die Taktverwaltung (S1 RSC) zur Verarbeitung einer Mehrzahl Quellen für den zentralen Takte (TRS) eingerichtet ist, wobei für die Ableitung der Trigger-Signale (TR) jeweils einer der Quellen ausgewählt wird.

13. Verfahren nach einem der vorhergehenden Patentansprüche,
**dadurch gekennzeichnet,**
**dass** die Konfiguration (CFG) der zentralen Taktverwaltung (S1 RSC) über ein API oder über eine Benutzeroberfläche der Taktverwaltung (S1 RSC) eingegeben oder geändert wird.

14. Verfahren nach einem der vorhergehenden Patentansprüche,
**dadurch gekennzeichnet,**
**dass** durch eine Echtzeitanwendung (RTA1, RTA2, S2 SN, S2 PNT) geforderte Eigenschaften für ein benötigtes Trigger-Signal (TR) spezifiziert und zu der zentralen Taktverwaltung (S1 RSC) übermittelt werden, insbesondere durch Zugriff auf ein API der Taktverwaltung (S1 RSC), wobei in der zentralen Taktverwaltung (S1 RSC) die Konfiguration (CFG) derart angepasst wird, dass für diese Echtzeitanwendung (RTA1, RTA2, S2 SN, S2 PNT) das benötigte Trigger-Signal (TR) generiert und bereitgestellt wird.

15. Taktverwaltung (S1 RSC) zur synchronisierten Ausführung einer Mehrzahl von Echtzeitanwendungen (RTA1, RTA2, S2 SN, S2 PNT) in einem industriellen Automatisierungssystem,
wobei die Echtzeitanwendungen (RTA1, RTA2, S2 SN, S2 PNT) in einer gemeinsamen Ausführungsumgebung, insbesondere auf einer gemeinsamen Hardware-Plattform, ablaufen,
**dadurch gekennzeichnet,**
**dass** vorgesehen ist,
**dass** in der Ausführungsumgebung die Taktverwaltung (S1 RSC) ausgeführt wird, wobei die zentrale Taktverwaltung (S1 RSC) dazu eingerichtet ist, aus einem zentralen Takt (TRS) jeweils ein abgeleitetes Trigger-Signal (TR) zur Steuerung des Betriebs der jeweiligen Echtzeitanwendungen (RTA1, RTA2, S2 SN, S2 PNT) zu generieren und dieses den Echtzeitanwendungen (RTA1, RTA2, S2 SN, S2 PNT) bereitzustellen, dass eine Mehrzahl Quellen für den zentralen Takt (TRS) verfügbar sind und vorgesehen wird, dass durch die Taktverwaltung (S1 RSC) zumindest eine der Quellen für den zentralen Takt (TRS) ausgewählt wird, und
**dass** die Taktverwaltung (S1 RSC) dazu eingerichtet ist, eine Konfiguration (CFG), insbesondere eine über ein API oder eine Benutzeroberfläche eingegebene oder geänderte Konfiguration (CFG), zu verarbeiten, wobei die Konfiguration (CFG) zumindest eine der Quellen für den zentralen Takt (TRS) spezifiziert und Vorschriften für die Ableitung der jeweiligen Trigger-Signale (TR) für die Echtzeitanwendungen (RTA1, RTA2, S2 SN, S2 PNT) aus dem oder einem der zentralen Takte (TRS) umfasst.
